Europäisches Patentamt

European Patent Office

Office européen des brevets

(11) Publication number: **0 263 575 B1**

# EUROPEAN PATENT SPECIFICATION

(45) Date of publication of patent specification: **02.09.92**   (51) Int. Cl.⁵: **B29C 45/00**, B29C 45/26, H01H 13/70

(21) Application number: **87304921.7**

(22) Date of filing: **03.06.87**

(54) **Molding method for the manufacturing of a resin molded part.**

(30) Priority: **08.10.86 JP 239798/86**

(43) Date of publication of application:
**13.04.88 Bulletin 88/15**

(45) Publication of the grant of the patent:
**02.09.92 Bulletin 92/36**

(84) Designated Contracting States:
**DE FR GB IT**

(56) References cited:
**EP-A- 0 078 934**
**DE-A- 3 102 219**
**FR-A- 2 602 909**

(73) Proprietor: **SUEHIRO INDUSTRIAL CO. LTD**
**22-22 Shinkamikosaka**
**Higashiosaka-shi Osaka(JP)**

(72) Inventor: **Imae, Eiji**
**4-33-808 Nishiiwata 3-chome**
**Higashiosaka-shi Osaka(JP)**
Inventor: **Imura, Yasuno**
**22-22 Shinkamikosaka**
**Higashiosaka-shi Osaka(JP)**

(74) Representative: **Gura, Henry Alan et al**
**MEWBURN ELLIS & CO. 2/3 Cursitor Street**
**London EC4A 1BO(GB)**

## Description

This invention relates to a molding method for manufacture of resin moldings as described in the preamble of the independent claim and, more particularly, a resin molded part having movable projections suitable for use in such applications as, for example, a remote control unit or the like control element for a TV set or video tape recorder, or a keyboard for a portable electronic calculator.

Such control elements or keyboards have a number of push-buttons and are generally so arranged that the push-buttons are seated in corresponding holes in a base and can be depressed against the force of internally disposed springs. However, such arrangement requires a large number of parts, which often leads to a high manufacturing cost.

In view of this problem, some users have been employing molded parts in which a base and push-button are integrally formed. Molded parts of this type use rubber as a molding material therefor and one or more thickened push-button-shaped projections are formed integrally with the base through the intermediary of thin wall portions continuing from the peripheral edges of the projections so that the projections are flexibly movable in the base.

It is true that such rubber mouldings involve fewer parts, but on the other hand, the fact that they require vulcanization means that the process of moulding takes a considerable time, which means lower productivity. In an attempt to solve this problem, it has been proposed to use a resin which requires no vulcanization and which permits ease of moulding, and to carry out integral moulding by employing a conventional side-gate type mould, for example. However, this has not been successful, since there is a high possibility of burrs and sink marks being produced because of unfavourable heat balance between thick projections and thin wall portions.

In FR 2602909 the use of mouldings of thermoplastic elastomers is proposed as an alternative to vulcanized rubber but the moulding process is complex and requires the different portions of the moulding to be moulded in separate stages. Even this does not necessarily ensure that the defects mentioned above can be avoided.

It is an object of the present invention to provide a moulding method which permits efficient production of an integral moulded part having movable projections which serve as push-buttons, with less risk of burrs and sink marks being produced.

According to the invention, a moulding method is provided for the manufacture from a thermoplastic elastomer of a moulded part having one or more flexibly movable, push-button-shaped thicker projections integrally moulded with a base through the intermediary of thinner wall portions, characterised in that the thinner wall portions are continued from the peripheral edges of the projections and that the moulding material is introduced into a mould for the part through at least one gate disposed adjacent the centre of a portion of the mould corresponding to each of said projections to mould the thicker projections, the thinner wall portions and the base integrally with each other.

Since, according to the invention, a thermoplastic elastomer which requires no vulcanization is used as a moulding material, the moulding operation need not take a long time, and it is possible to produce the resin molded parts employing a high-efficiency molding method, such as for example injection molding. Further, the fact that each gate is located adjacent the center of a corresponding thicker projection permits containment in the projection interior of a less hot mass of molding material introduced right after the start of molding operation and uniform spread of a subsequently introduced mass of molding material having higher temperatures and higher fluidity from the center gate portion and toward the peripheral edge portion, thus allowing satisfactory molding material flow from the thin wall portion to the base. In addition, the parting line region of the mold can be spaced from the gates by both the thinner wall portions and the base so that it is remote from the individual gates; therefore, the parting line region is unlikely to be subject to high molding pressure and burr formation.

Further advantages of the invention are described in the features of the dependent claims.

One embodiment of the invention will now be described with reference to the accompanying drawings, in which

FIG.1 is a sectional view showing by way of example an injection mold employed in practising the method of the invention;

FIG.2 is a front view showing by way of example a resin molded part produced in accordance with the method of theinvention;

FIG.3 is a rear view of the part in FIG.2, and

FIG.4 is a fragmentary enlarged sectional view of the part.

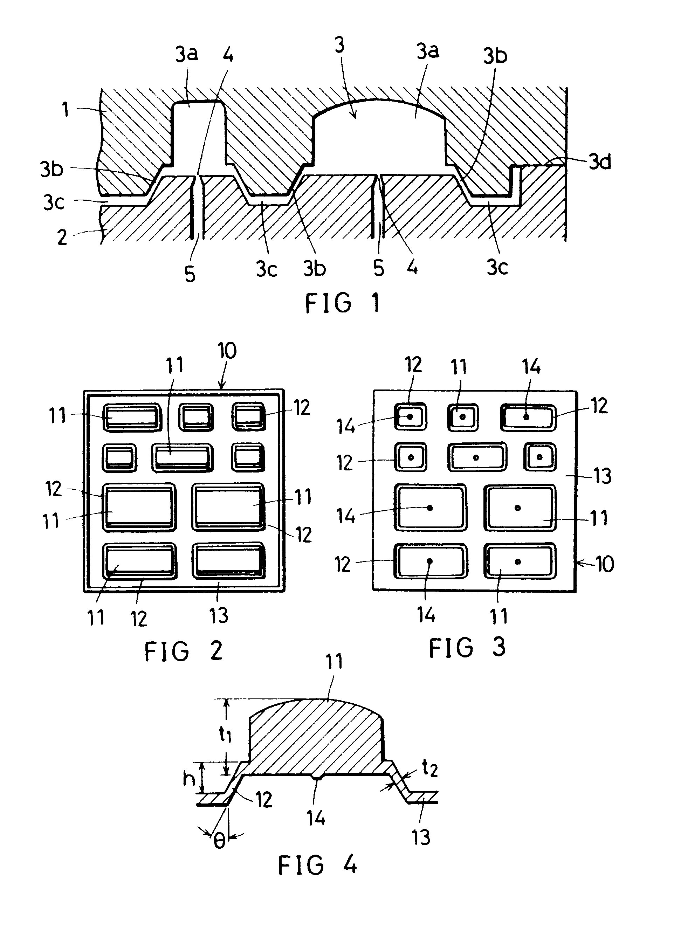

In the injection mold shown in FIG.1, a cavity 3 is defined by a movable part 1 and a fixed part 2. Indicated by 3a, 3b, 3c are, respectively, cavity portions corresponding to thicker projections, thinner wall portions, and a base of the part to be molded. Reference numeral 3d indicates a parting line between the parts 1 and 2 of the mold. Each numeral 4 designates a gate positioned at the center of a corresponding cavity portion 3a. Each gate 4 leads to a supply source of a molding material through a runner 5 and a sprue (not shown). For the molding material, a thermoplastic elastomer is used. The molding operation is carried out in same manner as conventional injection molding. Molding conditions, such as temperature and pressure, may be suitably selected according to the type of thermoplastic elastomer used and the configuration and size of the resin molded part to be produced.

FIGS.2 and 3 show by way of example a molded part 10, in which push-button-shaped thicker projections 11 are formed integrally with a base 13 through the intermediary of thinner wall portions 12 that continue from their peripheral edges. All the projections 11 are of same height and are arranged in the same plane. Reference numeral 14 indicates gate marks located centrally on the underside of each projection 11. Eachthinner wall portion 12 is flexible and moderately inclined, so that when finger pressure is applied to the top of a projection 11, a certain limited force is produced that sharply deforms the thinner wall portion 12 so as to allow the projection 11 to be depressed. That is to say, the thinner wall portions 12 can flex in and out and accordingly the projections are flexibly movable downwards and upwards. Therefore, by arranging electrical contacts on the respective undersides of the projections 11 it is possible to obtain a push-button switch unit which is convenient to manipulate.

A typical example of thermoplastic elastomer useful for the molding is a thermoplastic polyester elastomer produced by E.I.DuPont de Nemours & Co. or DU PONT-TORAY CO. LTD. and which is commercially sold under the trade name of "HYTREL". More particularly, a variety having a Shore hardness of 40D, preferably 35D, can be advantageously used. It has been also found that other crystalline thermoplastic elastomers, such as polyurethane elastomer, polyamide elastomer, and polyolefin, of low Shore hardness grade can be used with similar good results.

For use in applications such as a final control element for a remote control unit or a keyboard for a portable electronic calculator, the molded parts may be suitably designed according to relevant specifications, with respect to the number of projections, their sizes, and their arrangement. These factors have little bearing on the results of molding and can be flexibly determined according to the specifications. On the other hand, however, thickness of each projection 11 and of each wall portion 12 have considerable bearing on the flow of the molding material. For such thickness factors, therefore, appropriate values should be selected. It has been found that, as FIG.4 shows, where the thickness $t_1$ of a projection 11 is 3-4 mm and the thickness $t_2$ of a thinner wall portion 12 is O.1-0.2 mm (preferably 0.11-0.15 mm), satisfactory results are obtained. In order to provide smooth and flexible handling characteristics the thin wall portions 12 should be properly designed in inclination and height. Where their inclination $\theta$ and height h are respectively of the order of 40-60° and 1.5-2 mm, satisfactory results have been obtained.

In the above described embodiment, each gate 4 is provided at the centre of a corresponding cavity 3a. Alternatively, the gate may be eccentrically located insofar as such location is not detrimental to the merit of the invention. Again, in the foregoing embodiment, one gate 4 is provided for each projection 11; but where the projection 11 is large, the number of gates may be increased as required.

Moulded parts produced in accordance with the invention may be designed for a wide variety of applications, such as, for example, control elements for remote control units for TV set or video tape recorders, or keyboards for portable electronic calculators.

**Claims**

1. A moulding method for the manufacture from a thermoplastic elastomer of a moulded part having one or more flexibly movable, push-button-shaped thicker projections integrally moulded with a base through the intermediary of thinner wall portions, characterised in that the thinner wall portions are continued from the peripheral edges of the projections and that the moulding material is introduced into a mould for the part through at least one gate disposed adjacent the centre of a portion of the mould corresponding to each of said projections to mould the thicker projections, the thinner wall portions and the base integrally with each other.

2. A moulding method as set forth in claim 1, wherein said moulded part has two or more projections of same height arranged in same plane.

3. A moulding method as set forth in claim 1 or claim 2, wherein the thermoplastic elastomer used as a moulding material is a thermoplastic polyester elastomer.

4. A moulding method as set forth in claim 3, wherein the thermoplastic polyester elastomer used as a moulding material has a Shore hardness of less than 40D.

5. A moulding method as set forth in any one of the preceding claims wherein said projections, wall portions and base are so configured as to give a snap-action when pressure is applied to a respective projection.

**6.** A moulding method as set forth in any one of the preceding claims, wherein the projections are 3-4mm in thickness.

**7.** A moulding method as set forth in any one of the preceding claims, wherein the thinner wall portions are 0.1-0.2mm in thickness.

**8.** A moulding method as set forth in claim 7, wherein the thinner wall portions have an inclination of 40-60° and a height of 1.5-2mm.

**Patentansprüche**

**1.** Gießverfahren zur Herstellung eines Gießlings aus einem thermoplastischem Elastomer, der eine oder mehrere flexibel bewegbare , druckknopfförmige dickere Erhebungen aufweist, die zusammen mit einer Grundplatte unter Zwischenfügung von dünneren Wandteilen einstückig gegossen werden, dadurch gekennzeichnet, daß sich die dünneren Wandteile von den äußeren Rändern der Erhebungen aus fortsetzen und das Gießmaterial in eine Gußform für den Gießling durch mindestens eine nahe des Zentrums eines jeweils jeder der Erhebungen entsprechenden Bereichs der Gußform angeordnete Öffnung eingeführt wird, um die dickeren Erhebungen, die dünneren Wandteile und die Grundplatte miteinander einstückig zu gießen.

**2.** Gießverfahren nach Anspruch 1, bei dem der Gießling zwei oder mehrere in derselben Ebene angeordnete Erhebungen derselben Höhe hat.

**3.** Gießverfahren nach Anspruch 1 oder Anspruch 2, bei dem das als Gießmaterial verwendete thermoplastische Elastomer ein thermoplastisches Polyesterelastomer ist.

**4.** Gießverfahren nach Anspruch 3, bei dem das als Gießmaterial verwendete thermoplastische Elastomer eine Shorehärte von weniger als 40 D hat.

**5.** Grießverfahren nach einem der vorhergehenden Ansprüche, bei dem die Erhebungen, die Wandteile und die Grundplatte derart angeordnet sind, daß sie ein Schnappverhalten zeigen, wenn Druck auf eine der einzelnen Erhebungen ausgeübt wird.

**6.** Gießverfahren nach einem der vorhergehenden Ansprüche, bei dem die Erhebungen 3-4 mm dick sind.

**7.** Gießverfahren nach einem der vorhergehenden Ansprüche, bei dem die dünneren Wandteile 0,1-0,2 mm dick sind.

**8.** Gießverfahren nach Anspruch 7, bei dem die dünneren wandteile eine Neigung von 40-60 und eine Höhe von 1,5-2 mm haben.

**Revendications**

**1.** Procédé de moulage pour la fabrication, à partir d'un élastomère thermoplastique, d'une pièce moulée possédant une ou plusieurs saillies plus épaisses, mobiles flexiblement, en forme de bouton-poussoir, venues de moulage avec un support, par l'intermédiaire de parties de parois plus minces, caractérisé en ce que les parties de parois plus minces sont prolongées à partir des bords périphériques des saillies et que le matériau de moulage est introduit dans un moule pour la pièce à travers au moins une porte disposée adjacente au centre d'une partie du moule correspondant à chacune desdites saillies pour mouler les saillies plus épaisses, les parties de parois plus minces et le support en une pièce les uns avec les autres.

**2.** Procédé de moulage selon la revendication 1, dans lequel ladite pièce moulée possède deux projections ou plus de la même hauteur disposées dans un même plan.

**3.** Procédé de moulage selon la revendication 1 ou la revendication 2, dans lequel l'élastomère thermoplastique utilisé comme matériau de moulage est un élastomère polyesther thermoplastique.

**4.** Procédé de moulage selon la revendication 3, dans lequel l'élastomère polyester thermoplastique utilisé comme matériau de moulage possède une dureté de Shore de moins de 40D.

**5.** Procédé de moulage selon l'une des revendications précédentes dans lequel lesdites saillies, parties de parois et support sont configurées de façon à produire une action par encliquetage lorsqu'une pression est appliquée à une saillie respective.

**6.** Procédé de moulage selon l'une des revendications précédentes, dans lequel les saillies ont une épaisseur de 3-4 mm.

**7.** Procédé de moulage selon l'une des revendications précédentes, dans lequel les parties de parois plus minces ont une épaisseur de 0,1-0,2 mm.

8. Procédé de moulage selon la revendication 7, dans lequel les parties de parois plus minces possèdent une inclinaison de 40-60° et une hauteur de 1,5-2 mm.

FIG 1

FIG 2

FIG 3

FIG 4